# EUROPEAN PATENT APPLICATION

(11) **EP 4 633 215 A1**
(43) Date of publication of application: **15.10.2025**
(21) Application number: 24738498.5
(22) Date of filing: 03.01.2024
(51) Int. Cl.: H04W 8/26

(54) **INFORMATION ACQUISITION METHOD, FUNCTIONS, TERMINAL, AND STORAGE MEDIUM**

(30) Priority: 07.01.2023 CN 202310022461
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHENG, Shaowen, Beijing 100053 (CN); WANG, Dan, Beijing 100053 (CN); HAN, Yan, Beijing 100053 (CN); SUN, Tao, Beijing 100053 (CN)
(74) Representative: Novagraaf Technologies
(86) International application number: PCT/CN2024/070420
(87) International publication number: WO 2024/146565

(57) **Abstract**

The present application discloses an information acquisition method. The method comprises: a first function triggers a first terminal to send a first request message to a second function, wherein the first request message is used for acquiring a first identifier of the first terminal; the first terminal sends the first request message to the second function; the second function receives the first request message sent by the first terminal; the second function obtains the first identifier on the basis of the first request message and a service of the second function; the second function sends the first identifier to the first terminal or the first function; and the first terminal or the first function receives the first identifier sent by the second function. The present application also discloses a first function, a second function, a third function, a first terminal, and a computer readable storage medium.

## Description

### CROSS-REFERENCE TO RELATED APPLICATION

This application is based on and claims priority to a Chinese patent application No. 202310022461.8 filed on January 7, 2023, which is hereby incorporated by reference in its entirety.

### TECHNICAL FIELD

The present application relates to, but is not limited to, the field of communication, and particularly relates to an information acquisition method, a first function, a second function, a third function, a first terminal, and a computer-readable storage medium.

### BACKGROUND

In existing networks, a User Plane Functions (UPF) serves as a core network output point, and a Network Address Translation (NAT) function are often deployed behind it. The UPF, supporting the NAT functionality, may be registered in a Network Repository Function (NRF) providing UPF Provision information. The UPF Provision information may include Public Internet Protocol (IP) address pool information (i.e., a Public IP address range, additionally ports number range) for NAT. The Public IP address pool information may on per a digital Data Network Name (DNN) and Single Network Slice Selection Assistance Information (S-NSSAI) basis. Packets behind the UPF will use a public IP address, which may be shared by multiple User Equipment (UE) when the network address and port translation are applied. The UPF interacts with an Application Function (AF) through a next generation network (NG) interface 6 (referred to as N6 interface). The AP detects abnormal events for those packets associated with the UE based on IP addresses and port numbers (common UE addressing information).

However, UE identifiers (IDs) located behind the NAT are not unique, and UE Identity document (ID) release capability of the core network cannot be fully utilized by the AF using the UE IDs behind the NAT. Therefore, the AF cannot obtain the required UE ID. The AF cannot obtain a UE private IP address used internally in the 5th generation mobile communication technology core (5GC). Since the AF cannot obtain the UE private IP address corresponding to the common UE addressing information, the AF may not be able to request an appropriate action for the UE causing the abnormal event (e.g., a policy change for the UE).

### SUMMARY

Embodiments of the present application provide an information acquisition method, a first function, a second function, a third function, a first terminal, and a computer-readable storage medium, which provides a UE ID exposure scheme that supports NAT address translation with little change to a core network.

According to a first aspect, there is provided an information acquisition method applied to a first function. The method includes the following operations.

A first terminal is triggered to transmit a first request message to a second function. The first request message is used for obtaining a first identifier of the first terminal.

A first identifier of the first terminal transmitted by the second function is received.

According to a second aspect, there is provided an information acquisition method, applied to a second function. The method includes the following operations.

A first request message transmitted by a first terminal or a first function is received. The first request message is used for obtaining a first identifier of the first terminal.

The first identifier is obtained based on the first request message and a service of the second function.

The first identifier is transmitted to the first terminal or the first function.

According to a third aspect, there is provided an information acquisition method applied to a first terminal. The method includes the following operations.

A first request message is transmitted to a second function. The first request message is used for obtaining a first identifier of the first terminal.

The first identifier of the first terminal transmitted by the second function is received.

According to a fourth aspect, there is provided an information acquisition method applied to a third function. The method includes the following operations.

A second request message transmitted by the first function is received. The second request message carries a service name of a second function, a function type, an Internet Protocol address range of the second function, or an Internet Protocol address version expected by the second function.

Identification information of the second function is determined based on the service name of the second function, the function type, the Internet Protocol address range of the second function, or the Internet Protocol address version expected by the second function.

The identification information of the second function is transmitted to the first function.

In a fifth aspect, there is provided a first function, which includes a first processing module and a first receiving module.

The first processing module configured to a first terminal to transmit a first request message to a second function, the first request message is used for obtaining a first identifier of the first terminal.

The first receiving module is configured to receive the first identifier of the first terminal transmitted by the second function.

In a sixth aspect, there is provided a second function, which includes a second receiving module, a second processing module and a second transmitting module.

The second receiving module is configured to receive a first request message transmitted by a first terminal or a first function, the first request message is used for obtaining a first identifier of the first terminal.

The second processing module is configured to obtain the first identifier based on the first request message and a service of the second function.

The second transmitting module is configured to transmit the first identifier to the first terminal or the first function.

In a seventh aspect, there is provided a first terminal, which includes a third transmitting module and a third receiving module.

The third transmitting module is configured to transmit a first request message to a second function, the first request message is used for obtaining a first identifier of the first terminal.

A third receiving module, configured to receive the first identifier of the first terminal transmitted by the second function.

According to an eighth aspect, there is provided a third function which includes a fourth receiving module, a fourth processing module and a fourth transmitting module.

The fourth receiving module is configured to receive a second request message transmitted by a third function, the second request message carries a service name of a second function, a function type, an Internet Protocol address range of the second function, or an Internet Protocol address version expected by the second function.

The fourth processing module is configured to determine identification information of the second function based on the service name of the second function, the function type, the Internet Protocol address range of the second function, or the Internet Protocol address version expected by the second function.

The fourth transmitting module is configured to transmit the identification information of the second function to the first function.

In a ninth aspect, there is provided a first function which includes a first memory and a first processor.

The first memory is configured to store executable instructions.

The first processor is configured to execute the executable instructions stored in the first memory to perform the above information acquisition method.

In a tenth aspect, there is provided a second function, which includes a second memory and a second processor.

The second memory is configured to store executable instructions.

The second processor is configured to execute the executable instructions stored in the second memory to perform the above information acquisition method.

An eleventh aspect is a first terminal, there is provided a first terminal, which includes a third memory and a third processor.

The third memory is configured to store executable instructions.

The third processor is configured to execute the executable instructions stored in the third memory to perform the above information acquisition method.

In a twelfth aspect, there is provided a third function, which includes a fourth memory and a fourth processor.

The fourth memory is configured to store executable instructions.

The fourth processor is configured to execute the executable instructions stored in the fourth memory to perform the above information acquisition method.

According to a thirteenth aspect, an embodiment of the present application provides a chip for implementing the above-described information acquisition method. The chip includes a processor for calling and running a computer program from a memory so that an apparatus on which the chip is mounted performs the above-described information acquisition method.

According to a fourteenth aspect, an embodiment of the present application provides a computer-readable storage medium for storing a computer program that causes a computer to execute the above-described information acquisition method.

According to a fifteenth aspect, an embodiment of the present application provides a computer program product including computer program instructions that cause a computer to execute the above-described information acquisition method.

According to a sixteenth aspect, an embodiment of the present application provides a computer program that, when run on a computer, causes the computer to execute the above-described information acquisition method.

In the method provided by the embodiments of the present invention, a first function triggers a first terminal to transmit a first request message to a second function. Herein, the first request message is used for obtaining a first identifier of the first terminal. The first terminal transmits the first request message to the second function. The second function receives the first request message transmitted by the first terminal. The second function obtains the first identifier based on the first request message and a service of the second function. The second function transmits the first identifier to the first terminal or the first function. That is, the present application proposes a UE ID exposure scheme supporting NAT address translation with little changes to the core network. A request forwarding method is used through the first function. That is, the first function triggers the first terminal to transmit the request message to the second function, so that the second function may directly obtain the identifier of the first terminal, i.e., the UE ID, and feed back the identifier of the first terminal to the first function. In this way, in the present application, the UE ID can be obtained by using a small number of core network elements, it is not necessary to modify a plurality of core network elements in the existing network. Resources used for the network element modification is reduced.

### BRIEF DESCRIPTION OF THE DRAWINGS

FIG. 1 is a schematic diagram of a communication system according to embodiments of the present application.
FIG. 2 is a schematic flowchart of UE IP address mapping information exposure by UPF provided in the related art.
FIG. 3 is a first schematic flowchart of an information acquisition method according to embodiments of the present application.
FIG. 4 is a second schematic flowchart of an information acquisition method according to embodiments of the present application.
FIG. 5 is a schematic flowchart of Network Exposure Function (NEF) address acquisition according to the present application.
FIG. 6 is a schematic flowchart in which a NEF registers a new service on a NRF according to the present application.
FIG. 7 is a third schematic flowchart of an information acquisition method according to embodiments of the present application.
FIG. 8 is a schematic flowchart of an AF/UE specific UE ID retrieval according to the present application.
FIG. 9 is a schematic block diagram of a first function according to embodiments of the present application.
FIG. 10 is a schematic block diagram of a second function according to embodiments of the present application.
FIG. 11 is a schematic block diagram of a first terminal according to embodiments of the present application.
FIG. 12 is a schematic block diagram of a third function according to embodiments of the present application.
FIG. 13 is a schematic structural diagram of a communication device according to embodiments of the present application.
FIG. 14 is a schematic structural diagram of a chip according to embodiments of the present application.

### DETAILED DESCRIPTION

Hereinafter, technical solutions in embodiments of the present application will be described with reference to the accompanying drawings in the embodiments of the present application. It is obvious that the described embodiments are part of the embodiments of the present application, but not all the embodiments. Based on the embodiments in the present application, all other embodiments obtained by those skilled in the art without creative work fall within the scope of protection of the present application. It should be noted that the embodiments and features in the embodiments in the present application may be arbitrarily combined with each other as long as there is no conflict.

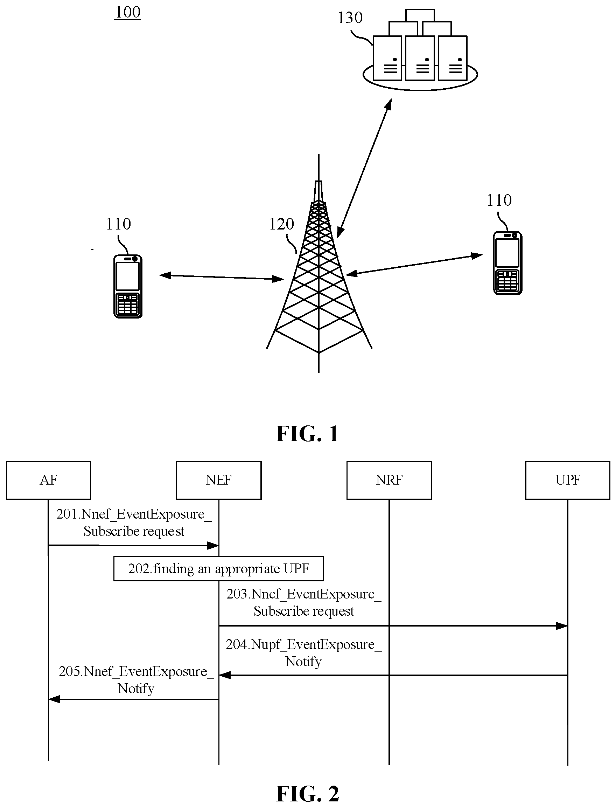

FIG. 1 is a schematic diagram of a communication system according to embodiments of the present application.

As shown in FIG. 1, the communication system 100 may include terminal devices 110 and a network device 120. The network device 120 may communicate with the terminal devices 110 through an air interface. Multi-service transmission is supported between the terminal devices 110 and the network device 120.

It should be understood that the embodiments of the present application are only illustrated with reference to the communication system 100, but the embodiments of the present application are not limited thereto. That is, technical solutions according to the embodiments of the present application can be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) systems, enhanced Machine-Type Communications (eMTC) systems, 5G communication systems (also referred to as New Radio (NR) communication systems), future communication systems, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g., UE) located within the coverage area.

The network device 120 may be an Evolutionary Node B (eNB, or eNodeB) in a Long Term Evolution (LTE) system, a Next Generation Radio Access Network (NG RAN) device, a base station (gNB) in a NR system, or a radio controller in a Cloud Radio Access Network (CRAN). Alternatively, the network device 120 may be a relay station, an access point, a vehicle-mounted device, a wearable device, a hub, a switch, a bridge, a router, or a network device in a future evolved Public Land Mobile Network (PLMN).

The terminal device 110 includes, but is not limited to, any terminal device that connects to the network device 120 or other terminal devices via a wired or wireless connection.

For example, the terminal device 110 may refer to an access terminal, User Equipment (UE), a subscriber unit, a subscriber station, a mobile station, a mobile site, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, etc.

The terminal device 110 may be used for device-to-device (D2D) communication.

The communication system 100 may further include a core network device 130 that communicates with the base station. The core network device 130 may be a 5G Core (5GC) device, for example, an Access and Mobility Management Function (AMF) device, for another example, an Authentication Server Function (AUSF) device, for another example, a UPF device, for another example, a Session Management Function (SMF) device. Alternatively, the core network device 130 may also be an Evolved Packet Core (EPC) device of an LTE network, for example, a Session Management Function + Core Packet Gateway (SMF + PGW-C) device. It should be understood that the SMF + PGW-C can implement functions that may be implemented by the SMF and the PGW-C. In the process of network evolution, the name of the above-mentioned core network device may be changed, or a new network entity may be formed by dividing the functions of the core network, which is not limited by the embodiments of the present application.

The respective functional units in the communication system 100 may also establish a connection with each other through a NG interface to realize communication.

For example, a terminal device establishes an air interface connection with an access network device via a NR interface, so as to transmit user plane data and control plane signalling. The terminal device may establish a control plane signalling connection with an AMF via a NG interface 1 (referred to as N1). An access network device, such as a next generation radio access base station (gNB), may establish a user plane data connection with a UPF via a NG interface 3 (referred to as N3). The access network device may establish a control plane signalling connection with the AMF via a NG interface 2 (referred to as N2). The UPF may establish a control plane signalling connection with a SMF via a NG interface 4 (referred to as N4). The UPF may interact with the data network via N6 about user plane data. The AMF may establish a control plane signalling connection with the SMF via a NG interface 11 (referred to as N11). The SMF may establish a control plane signalling connection with the PCF via a NG interface 7 (referred to as N7).

FIG. 1 exemplarily illustrates one base station, one core network device, and two terminal devices. Alternatively, the communication system 100 may include a plurality of base station devices and another number of terminal devices may be included within the coverage range of each base station, which is not limited in the embodiments of the present application.

It should be noted that FIG. 1 only illustrates a system to which the present application applies by way of an example. Also, the methods shown in the embodiments of the present application may be applied to other systems. Further, the terms "system" and "network" are often used interchangeably herein. Herein, the term "and/or" is only an association relationship describing an association object, and means that there may be three relationships. For example, A and/or B may mean that A alone exists, both A and B exist, and B alone exists. In addition, the character "/" herein generally indicates that the related objects before and after are in an "or" relationship. It should also be understood that the "indicate" mentioned in the embodiments of the present application may be "directly indicate", "indirectly indicate", or an associated relationship. For example, A indicates B, which may mean that A directly indicates B, for example, B may be obtained by using A, or may mean that A indicates B indirectly, for example, A indicates C, and B may be obtained by using C, or may mean that there is an association relationship between A and B. It should also be understood that "correspondence" mentioned in the embodiments of the present application may indicate that there is a direct correspondence or indirect correspondence between two items, may indicate that there is a correlation relationship between the two items, or may indicate a relationship between indicating and being indicated, configuring and being configured, or the like. It should also be understood that the "predefined" or "predefined rules" mentioned in the embodiments of the present application may be realized by storing corresponding codes, tables, or other ways that can be used to indicate relevant information in advance in devices (e.g., including terminal devices and network devices), the present application does not limit specific implementations thereof. For example, predefined may refer to defined in the protocol. It should also be understood that in the embodiments of the present application, the "protocol" may refer to a standard protocol in the field of communication, and may include, for example, an LTE protocol, a NR protocol, and related protocols applied to future communication systems, which are not limited in the present application.

In order to facilitate understanding of the technical solutions of the embodiments of the present application, the solutions related to the embodiments of the present application will be described below, and the related solutions below can be arbitrarily combined with the technical solutions of the embodiments of the present application as options, and all of them belong to the scope of protection of the embodiments of the present application.

Unless otherwise defined, all technical and scientific terms used herein have the same meaning as commonly understood by those skilled in the art belonging to the present application. The terms used herein are for the purpose of describing embodiments of the present application only and are not intended to limit the present application.

In Release 17, i.e., Rel-17, which is the third version specification of the 5G standard, the AF specific UE ID retrieval has been specified that the AF requests a corresponding Generic Public Subscription Identifier (GPSI) for the IP address of the UE. However, the case where UE IP address provided by the AF to the NEF corresponds to an IP address that has been NATed (Network and Port Address Translation) is not supported in this release.

In order to obtain the mapped UE private IP address from the UE public IP addressing information, the AF may request UE IP address mapping information exposure by the UE's UPF. This solution is suitable for situations where the UPF supports NAT. That is, NAT functionality deployed outside the UPF is not supported.

FIG. 2 is a schematic flowchart of UE IP address mapping information exposure by UPF provided in the related art.

At Operation 201, an AF transmits a Nnef_EventExposure_Subscribe request to a NEF. That is, the AF issues a Nnef_EventExposure_Subscribe (i.e., NATed addressing information, AF ID) service operation to request UE IP address mapping information for a UE. Herein, Nnef_EventExposure_Subscribe includes NATed addressing information and an AF ID. The NATed addressing information includes a public IP address and a port number. Here, the AF request may be used for a one-time notification.

At Operation 202, a NEF finds an appropriate UPF by using a UPF selection method targeting the NATed addressing information for a UE and DNN=S-NSSAI associated with the AF ID. Herein, when finding the appropriate UPF, a Network Repository Function (NRF) discovery may be used. The NEF may also use the NATed addressing information to determine an "ipDomain" attribute.

At Operation 203, the NEF transmits a Nupf_EventExposure_Subscribe request to a UPF to request UE IP address mapping information. The public UE addressing information, DNN, S-NSSAI associated with the AF ID are carried in the Nupf_EventExposure_Subscribe request.

At Operation 204, the UPF responds with 5GC UE IP address mapping information to the NEF over the Nupf_EventExposure_Notify service operation. The 5GC UE IP address mapping information includes a private IP address of the UE.

At Operation 205, the NEF responds to the AF over the Nnef_EventExposure_Notify service operation. The Nnef_EventExposure_Notify operation may provide 5GC UE IP address mapping information, and may additionally include address assistance information which can help to uniquely identify the related IP address.

It should be noted that, in the above scheme, it is necessary to register the NATed IP pool of each IP domain in the UPF network service template (NFprofile), and it is necessary for the UPF to support exposure service for UE IP address mapping information. The NEF is required to support the newly introduced exposure for the UPF to UE IP address mapping information. The NRF is required to support UPF registration using UPF NAT information for each IP domain and support UPF discovery with the NATed UE IP address as input. That is, for the above scheme, there are modification requirements for multiple core network elements.

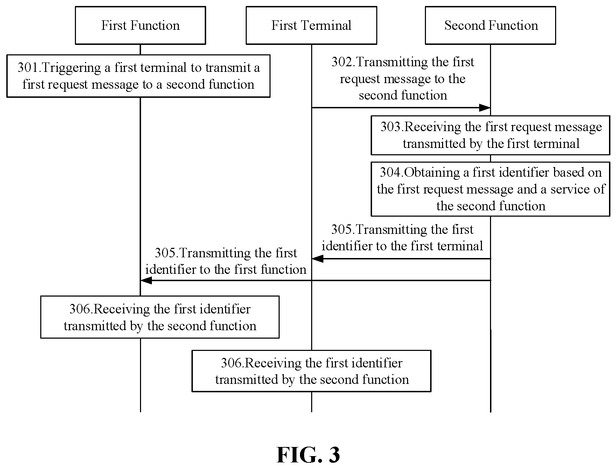

FIG. 3 is a schematic flowchart of an information acquisition method according to embodiments of the present application. As shown in FIG. 3, the method is applied to at least the core network device 130 and the terminal device 110 in the communication system 100 shown in FIG. 1. The method includes the following operations.

At Operation 301, a first function triggers a first terminal to transmit a first request message to a second function.

Herein, the first request message is used for obtaining a first identifier of the first terminal.

In the embodiments of the present application, the first function may be an AF, a NEF, or another network function (NF) capable of triggering the first terminal to transmit the first request information to the second function. The second function may be an AF such as an edge enabler server (EES) or a NEF. That is, the first function and the second function may be the same entity, for example, both are NEFs.

In the embodiments of the present application, each of the first function and the second function belongs to the core network device 130 and may be a functional entity such as a network element, a controller, or a server. Here, the network element may be either a network element implemented on dedicated hardware, a software instance running on dedicated hardware, or an instance of virtualizing functions on a suitable platform.

In the embodiments of the present application, the first request message is a redirection request triggered by the first function.

In the embodiments of the present application, the first terminal is a device that supports both Internet Protocol version 4 (IPv4) and Internet Protocol version 6 (Ipv6) stacks.

In the embodiments of the present application, the second function, for example, the NEF, is an IPv6 device, the NEF needs to support the UE ID exposure procedure triggered by the UE, and has registered the capability in the third function, for example, the NF Repository Function (NRF).

In the embodiments of the present application, the timing at which the first function triggers the first terminal to transmit the first request message to the second function is a moment when the first function determines that it is necessary to obtain the identifier of the first terminal.

In the embodiments of the present application, the first identifier of the first terminal i.e., the UE ID, includes a NATed private IP address corresponding to the first terminal, a public IP address, an external identifier, and a private IP address before NAT corresponding to the first terminal.

In the embodiments of the present application, the first request message carries a terminal address of the first terminal, such as an IPv6 address, and/or a second identifier of the first function, such as an AF ID.

In the embodiments of the present application, the number of first terminals may be one or more.

At Operation 302, the first terminal transmits the first request message to the second function.

In the embodiments of the present application, the first terminal is deployed with a client. The first request message may be generated by the first terminal. The first request message may be generated by the client on the first terminal. That is, when the first function triggers the first terminal to transmit the first request message to the second function, the client on the first terminal may transmit the first request message to the second function.

In the embodiments of the present application, a manner for transmitting the first request message includes: in-band, out-of-band, media, signalling, data, message, control plane, user plane, etc.

In the embodiments of the present application, the first request message may also be a response message, an indication message, an answer message, etc.

At Operation 303, the second function receives the first request message transmitted by the first terminal.

At Operation 304, the second function obtains the first identifier based on the first request message and a service of the second function.

In the embodiments of the present application, the second function obtains the first identifier based on at least one of the service of the second function, the terminal address of the first terminal, and the second identifier.

Here, the terminal address of the first terminal includes, but is not limited to, an IP address and a Media Access Control Address (MAC address) of the first terminal.

In the embodiments of the present application, the service of the second function may be a service deployed on the second function, or a service deployed on a related device that can be directly called by the second function.

In the embodiments of the present application, if the first function is an AF and the second function is a NEF, then the service of the second function is to obtain the UE ID according to an existing UE ID retrieval service and the received IPv6 address. If the first function is a NEF, the second function is a Unified Data Management (UDM), then the service of the second function is a user data acquisition (UDM_SDM_Get) service.

At Operation 305, the second function transmits the first identifier to the first terminal or the first function.

In the embodiments of the present application, when the second function obtains the first identifier, the second function may feedback the first identifier to the first terminal, and the first terminal may transmit the first identifier to the first function. Alternatively, the second function may be directly fed back to the first function.

In the embodiments of the present application, a manner of transmitting the first identifier includes in-band, out-band, media, signalling, data, message, control plane, user plane, etc. Herein, the first identifier is transmitted in an in-band manner through an existing media channel, so as to better be compatible with the existing system and reduce the cost of system modification. In addition, when the first identifier is transmitted to a plurality of receiving parties, the established media plane communication channel is a one-to-many multicast/broadcast communication channel. In such a manner, the first identifier is transmitted only once through the established multicast/broadcast communication channel and the plurality of receiving parties may receive it, effectively reducing the number of transmitting messages.

In the embodiments of the present application, the second function determines an address of the first function based on the second identifier. The second function transmits the first identifier to the first function based on the address of the first function. The first function receives the first identifier. Here, the address of the first function includes, but is not limited to, the IP address of the first function and the MAC address of the first function.

In the embodiments of the present application, a redirection message is transmitted to the first terminal. The first terminal receives the redirection message transmitted by the second function. Herein the redirection message carries the first identifier.

At Operation 306, the first terminal or the first function receives the first identifier transmitted by the second function.

In the method provided by the embodiments of the present invention, a first function triggers a first terminal to transmit a first request message to a second function. Herein, the first request message is used for obtaining a first identifier of the first terminal. The first terminal transmits the first request message to the second function. The second function receives the first request message transmitted by the first terminal. The second function obtains the first identifier based on the first request message and a service of the second function. The second function transmits the first identifier to the first terminal or the first function. That is, the present application proposes a UE ID exposure scheme supporting NAT address translation with little changes to the core network. A request forwarding method is used through the first function. That is, the first function triggers the first terminal to transmit the request message to the second function, so that the second function may directly obtain the identifier of the first terminal, i.e., the UE ID, and feed back the identifier of the first terminal to the first function. In this way, in the present application, while the UE ID is obtained by using a small number of core network elements, it is not necessary to modify a plurality of core network elements in the existing network. Resources used for the network element modification is reduced.

In some embodiments, before the operation 301 in which the first function triggers the first terminal to transmit the first request message to the second function, the method provided by the embodiments of the present invention includes the following contents.

At operation A1, the first terminal transmits a service request to the first function.

Here, the service request carries addresses for indicating whether the first terminal supports two Internet protocol types.

**In** the embodiments of the present application, the first terminal may indicate that it supports dual-stack in the service request. For example, it may carry two addresses in the service request source. Alternatively, the first function may inquire the first terminal whether dual-stack is supported.

At operation A2, the first function receives the service request transmitted by the first terminal.

At operation A3, the first function determines, based on the service request, whether the first identifier of the first terminal is required to be obtained when responding to the service request.

In the embodiments of the present application, the first function determines whether it is necessary to trigger the first terminal to transmit the first request message to the second function according to a (pre-configured) policy. For example, the first function determines whether there is a cooperation requirement for some services of the first terminal and it needs to know the UE ID. If the UE ID needs to be known, the first terminal is triggered to transmit the first request message to the second function.

At operation A4, if the first function determines that the first identifier of the first terminal is required to be obtained when responding to the service request, then the operation 301 is executed.

If the first function determines that it is not necessary to obtain the first identifier of the first terminal when responding to the service request, the first function may directly respond to the service request and perform the service operation for the response.

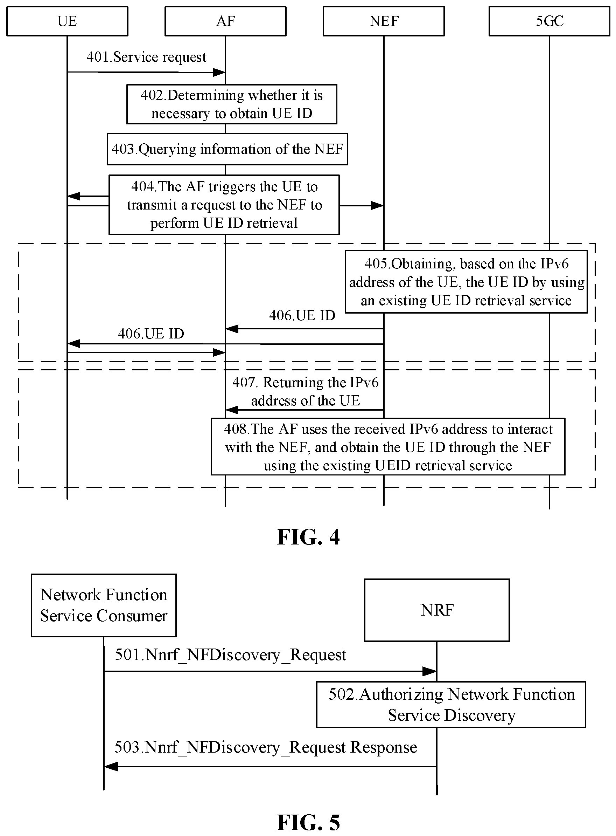

FIG. 4 is a schematic flow diagram of an information acquisition method according to the present application.

At operation 401, UE transmits a service request to an AF.

The AF receives the service request which is transmitted by the UE and carries its own public network IPv4 address, for example, HTTP GET (IPv4). Here, the UE indicates that it supports dual-stack in the GET. Alternatively, the AF asks the UE whether it supports dual-stack.

At operation 402, the AF determines, according to a (pre-configured) policy, whether it is necessary to trigger HTTP 302 redirection, that is, whether it is necessary to obtain the UE ID.

At operation 403, the AF queries information of the NEF from a NRF according to information carrying the IP address segment which is pre-configured or is dynamic.

At operation 404, if the AF determines that some services of the UE have cooperation requirements and the UE ID is required to be known, the AF triggers a Uniform Resource Identifier (URI) for the NEF of IPv6 to perform UE ID retrieval, that is, the AF triggers the UE to transmit a request to the NEF to perform UE ID retrieval.

Here, the AF ID may be carried in the "Content-Type" message header of the service request and transmitted to the UE to trigger the UE to perform automatic redirection and request the UE ID retrieval of the NEF. The "Content-Type" message header may also carry authentication information of the AF, thereby helping the UE to pass the authentication of the NEF.

In the embodiments of the present application, the UE transmits a request to the NEF to trigger UE ID retrieval. Because interaction is performed with an IPv6 device, an IPv6 address of the UE is carried.

At operation 405, the NEF obtains, based on the IPv6 address of the UE, the UE ID by using an existing UE ID retrieval service.

At operation 406, the NEF transmits the UE ID to the UE/AF.

When the NEF transmits the UE ID to the UE, the UE returns a URI to trigger HTTP redirect, and the UE returns the replied redirect back to the AF. Or, the NEF directly transmits the UE ID to the AF (for example, the URL of the AF is obtained from the Referer).

At operation 407, the NEF transmits the IPv6 address of the UE to the AF, that is, returns the IPv6 address of the UE.

At operation 408, the AF uses the received IPv6 address to interact with the NEF, and obtain the UE ID through the NEF using the existing UEID retrieval service.

In some embodiments, the method provided by the embodiments of the present invention includes the following contents.

At operation B1, the first function obtains identification information of the second function.

Herein, the identification information includes at least one of the following:

A third identifier of the second function;

An Internet Protocol address of the second function;

An Internet Protocol version number of the second function;

A fully qualified domain name of the second function; and

A port number of the second function.

In the embodiments of the present application, the third identifier of the second function includes, but is not limited to, an EESID.

In some embodiments, the AF has the ability to obtain the IPv6 address/port of the NEF.

In some embodiments, the Operation B1 of obtaining the identification information of the second function may be implemented by Operation B11, Operation B12, Operation B13, or Operations B14 to B18.

At operation B11, the first function obtains the identification information of the second function from a local profile of the first function.

At operation B12, the first function performs a domain name system query by using the fully qualified domain name of the second function to obtain the identification information of the second function.

At operation B13, the first function performs a service discovery procedure, that is, TS23.558. clause 8.3. 3, by using the third identifier of the first terminal, so as to obtain the identification information of the second function.

At operation B14: the first function transmits a second request message to the third function.

Herein, the second request message carries a service name of the second function, a function type, an Internet Protocol address range of the second function, or an expected Internet Protocol address version of the second function.

At operation B15, the third function receives the second request message transmitted by the first function.

At operation B16, the third function determines the identification information of the second function based on the service name of the second function, the function type, the Internet Protocol address range of the second function, or the expected Internet Protocol address version of the second function.

At operation B 17, the third function transmits the identification information of the second function to the first function.

At operation B18, the first function receives the identification information of the second function transmitted by the third function.

Herein, the identification information of the second function is determined by the third function based on the service name of the second function, the function type, the Internet Protocol address range of the second function, or the expected Internet Protocol address version of the second function.

In the embodiments of the present application, a manner in which the AF obtains the IPv6 address/port of the NEF may include locally configuring in the AF. Alternatively, the AF may discover the Fully Qualified Domain Name (FQDN) or IP address/port of the NEF/L-NEF(s) by performing a DNS query using an external identifier of a single UE or using an external group identifier of a group of UEs. Alternatively, the AF may discover the FQDN or IP address/port of the NEF or L-NEF by using the NRF. Here, the NRF needs to support NEF selection based on the requested IP address version.

FIG. 5 is a schematic flowchart of NEF address acquisition provided in the present application. It should be noted that the AF discovers the appropriate NEF address through the NRF.

At Operation 501, a NF service consumer, e.g. AF, transmits Nnrf_NFDiscovery_Request to the NRF. That is, the NF service consumer invokes Nnrf_NFDiscovery_Request (including an Expected NF service Name, a NF Type of the expected NF instance, a NF type of the NF consumer, an IP address range, an Expected NF IP address version (The IP address version includes at least one of IPv4 and IPv6)) from an appropriate configured NRF in the same Public Land Mobile Network (PLMN).

At Operation 502, the NRF authorizes NF Service Discovery. That is, the NRF authorizes the Nnrf_NFDiscovery_Request. Based on the profile of the expected NF/NF service, the type of the NF service consumer, and the Expected NF IP address version included in the Nnrf_NFDiscovery_Request, the NRF determines whether the NF service consumer is allowed to discover an expected NF instance(s).

At Operation 503, the NRF replies the NF service consumer through Nnrf_NFDiscovery _Request Response. That is, if the NF service consumer is allowed discover the expected NF instance(s), the NRF determines a set of NF instance(s) matching the Nnrf_NFDiscovery _Request and internal policies of the NRF and transmits the NF profile(s) of the determined NF instances.

In some embodiments, the method provided by the embodiments of the present invention includes the following contents.

At Operation C1, the first function transmits a third request message to the third function.

Herein, the third request message is used to indicate that the second function supports a retrieval service or provision service for the identifier of the terminal.

In the embodiments of the present application, a manner of transmitting the third request message includes: in-band, out-of-band, media, signaling, data, message, control plane, user plane, etc.

At Operation C2, the third function receives the third request message transmitted by the first function.

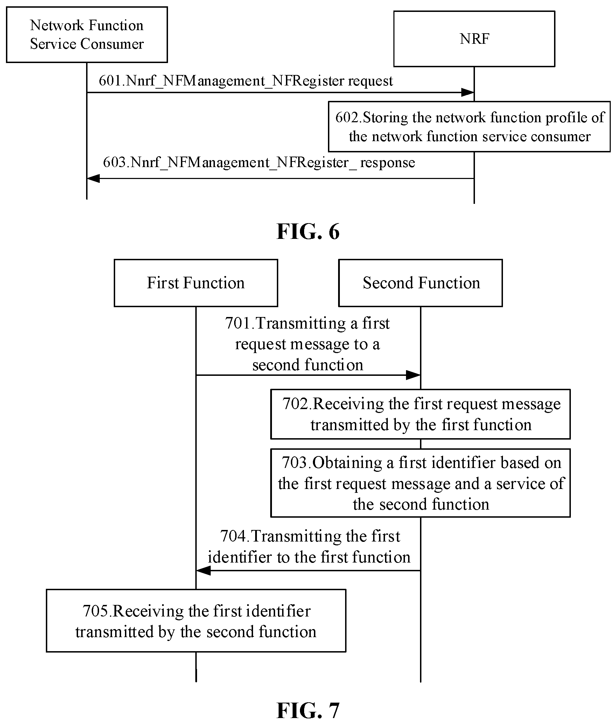

FIG. 6 is a schematic flowchart in which the NEF registers a new service on the NRF according to the present application. Herein, the NEF needs to be able to support the authentication of the request initiated by the UE when it receives the request from the UE.

At Operation 601, the NF service consumer, such as the NEF, transmits a Nnrf_NFManagement_NFRegister request to the NRF. That is the NEF transmits the Nnrf_NFManagement_NFRegister/Update Request message to NRF to inform the NRF of its NF profile when the NF service consumer becomes operative for the first time.

It should be noted that the Nnrf_NFManagement_NFRegister/Update Request message indicates to the NRF that the NEF supports the UE ID retrieval service from the UE, and the IP address of the NEF is IPv6.

At Operation 602, the NRF stores the NF profile of the NF service consumer.

In the embodiments of the present application, when the NRF stores the NF profile of the NF service consumer, it also marks the NF service consumer available.

At Operation 603, the NRF transmits a Nnrf_NFManagement_NFRegister_response to the network function service consumer. That is, the NRF acknowledge NF Registration is accepted via the Nnrf_NFManagement_NFRegister_response.

FIG. 7 is a schematic flowchart of an information acquisition method according to embodiments of the present application. As shown in FIG. 7, the method is applied to at least the core network device 130 in the communication system 100 shown in FIG. 1, and the method includes the following operations.

At Operation 701, a first function transmits a first request message to a second function.

Herein, the first request message is used for obtaining a first identifier of the first terminal.

In the embodiments of the present application, the first request message carries a terminal address of the first terminal and/or a second identifier of the first function.

In the embodiments of the present application, the first request message is a redirection request triggered by the first function.

At Operation 702, the second function receives the first request message transmitted by the first function.

At Operation 703, the second function obtains the first identifier based on the first request message and a service of the second function.

In the embodiments of the present application, the second function obtains the first identifier based on at least one of the service of the second function, the terminal address of the first terminal and the second identifier.

At Operation 704, the second function transmits the first identifier to the first function.

At Operation 705, the first function receives the first identifier transmitted by the second function.

In the embodiments of the present application, the AF/UE supports specific UE ID retrieval. Here, the UE Identifier is represented by an External Identifier as defined in TS 23.003 [33].

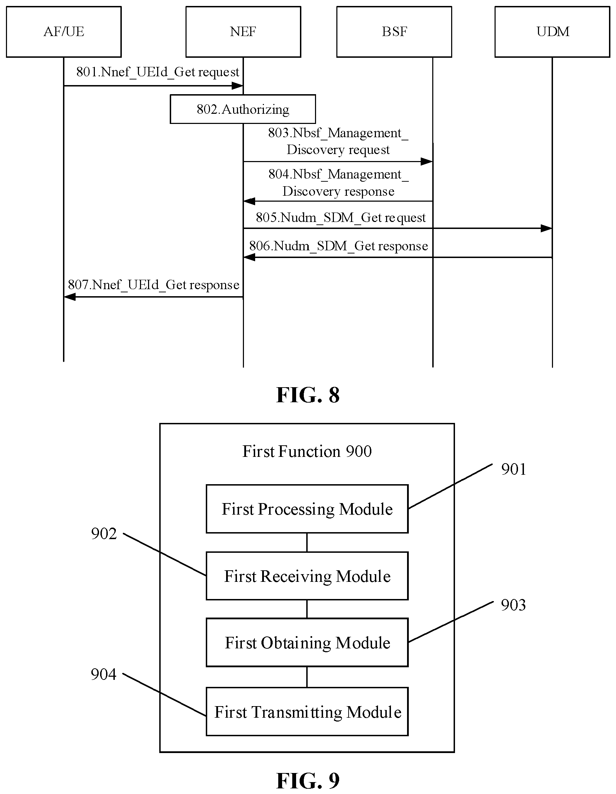

FIG. 8 is a schematic flowchart of an AF/UE specific UE ID retrieval according to the present application.

At Operation 801, the AF/UE transmits a Nnef_UEId_Get request to the NEF. That is, the AF/UE requests to retrieve the UE ID via the Nnef_UEId_Get service operation. The request message shall include a UE address (IP address or MAC address) and an AF Identifier, or may include Machine Type Communications (MTC) Provider Information, Application Port ID, IP domain. If available, the AF may also provide corresponding DNN and/or S-NSSAI.

At Operation 802, the NEF authorizes the AF/UE request.

If the authorization is not granted, the NEF replies to the AF with a Result value indicating authorization failure. Otherwise, the NEF proceeds with the following operations. The NEF determines corresponding DNN and/or S-NSSAI information: this may have been provided by the AF or is determined by the NEF based on the requesting AF Identifier and MTC Provider Information.

At Operation 803, the NEF transmits a Nbsf_Management_Discovery request to the BSF. That is, the NEF uses a Nbsf_Management_Discovery service operation with a UE address and IP domain and/or DNN and/or S-NSSAI to retrieve the session binding information of the UE.

At Operation 804, the BSF transmits a Nbsf_Management_Discovery response to the NEF.

If no Subscription Permanent Identifier (SUPI) is received in the session binding information from the BSF, the NEF replies to the AF with a Result value indicating that the UE ID is not available.

At Operation 805, the NEF transmits a Nudm_SDM_Get request to the UDM. That is, the NEF interacts with the UDM to request a service operation via the Nudm_SDM_Get request, to retrieve the AF specific UE identifier. The request message includes a SUPI and at least one of an application port ID, MTC provider information and an AF identifier.

At Operation 806, the UDM transmits a Nudm_SDM_Get response to the NEF. That is, the UDM respond to the NEF with an AF specific UE identifier represented as an External Identifier for the UE which is uniquely associated with the application port ID, MTC provider Information and/or the AF Identifier.

At Operation 807, the NEF transmits a Nnef_UEId_Get response to the AF/UE. That is, the NEF further responds to the AF/UE with the information (including the AF specific UE Identifier represented as the External Identifier) received from the UDM.

In the embodiments of the present application, if the reply is to the AF, the NEF deduces the address of the AF according to the AF ID, and transmits the UE ID to the AF. If the reply is to the UE, the reply should be a redirect URI, which carries the UE ID into the content and brings it to the AF.

The embodiments of the present application provide a first function. The first function may be used to implement the information acquisition methods provided by the embodiments corresponding to FIG. 3 and FIG. 7. Referring to FIG. 9, the first function 900 includes a first processing module 901 and a first receiving module 902.

The first processing module 901 is configured to trigger a first terminal to transmit a first request message to the second function. Herein, the first request message is used for obtaining a first identifier of the first terminal.

The first receiving module 902 is configured to receive the first identifier of the first terminal transmitted by the second function.

In other embodiments of the present application, the first request message carries a terminal address of the first terminal and/or a second identifier of the first function.

In other embodiments of the present application, the first identifier is obtained by the second function based on at least one of a service of the second function, the terminal address of the first terminal and the second identifier.

In other embodiments of the present application, the first request message is a redirection request triggered by the first function.

In other embodiments of the present application, the first receiving module 902 is configured to receive a service request transmitted by the first terminal.

The first processing module 901 is configured to determine, based on the service request, whether the first identifier of the first terminal is required to be obtained when responding to the service request.

The first processing module 901 is configured to trigger the first terminal to transmit the first request message to the second function if the first function determines that the first identifier of the first terminal is required to be obtained when responding to the service request.

In other embodiments of the present application, the first function 900 further includes: a first obtaining module 903, which is configured to obtain identification information of the second function. Herein, the identification information includes at least one of: a third identifier of the second function, an Internet Protocol address of the second function, an Internet Protocol version number of the second function, a fully qualified domain name of the second function and a port number of the second function.

In other embodiments of the present application, the first obtaining module 903 is configured to obtain identification information of the second function from a local profile of the first function.

The first processing module 901 is configured to obtain the identification information of the second function by performing a domain name system query using the fully qualified domain name of the second function.

The first processing module 901 is configured to obtain the identification information of the second function by performing a service discovery procedure using a third identifier of the first terminal.

In other embodiments of the present application, the first function 900 further includes: a first transmitting module 904, which is configured to transmit a second request message to a third function. Herein, the second request message carries a service name of the second function, a function type, an Internet Protocol address range of the second function, or an expected Internet Protocol address version of the second function.

The first receiving module 902 is configured to receive the identification information of the second function transmitted by the third function. Herein, the identification information of the second function is determined by the third function based on the service name of the second function, the function type, the Internet Protocol address range of the second function, or the expected Internet Protocol address version of the second function.

The description for the embodiments of the above device is similar to that for the embodiments of the above method and the embodiments of the above device have similar beneficial effects as the embodiments of the above method. For technical details not disclosed in the embodiments of the device of the present application, reference should be made to the description for the embodiments of the methods of the present application for understanding.

It should be noted that, in the embodiments of the present application, if the information acquisition method described above is implemented in the form of a software function module and sold or used as an independent product, the information acquisition method may be stored in a computer-readable storage medium. Based on such an understanding, the technical solutions of the embodiments of the present application, essentially or in part contributing to the relevant technology, may be embodied in the form of a software product, which is stored in a storage medium and includes a plurality of instructions for causing a terminal device to execute all or part of the methods of each embodiment of the present application. The storage medium includes various media capable of storing program codes, such as a Universal Serial Bus (USB) flash disk, a removable hard disk, a Read-Only Memory (ROM), a magnetic disk, or an optical disk. As such, the embodiments of the present application are not limited to any particular combination of hardware and software.

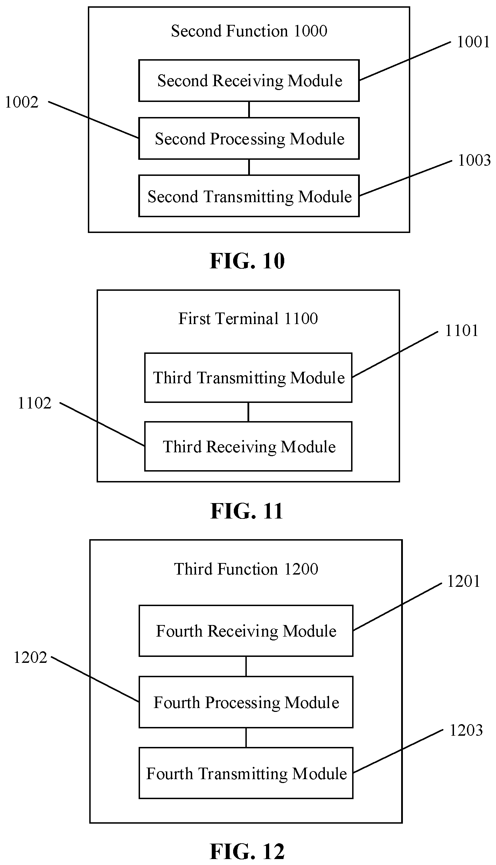

The embodiments of the present application provide a second function. The second function can be used to implement the information acquisition methods provided by the embodiments corresponding to FIG. 3 and FIG. 7. Referring to FIG. 10, the second function 1000 includes a second receiving module 1001, a second processing module 1002 and a second transmitting module 1003.

The second receiving module 1001 is configured to receive a first request message transmitted by a first terminal or a first function. Herein, the first request message is used for obtaining a first identifier of the first terminal.

The second processing module 1002 is configured to obtain the first identifier based on the first request message and a service of the second function;

The second transmitting module 1003 is configured to transmit the first identifier to the first terminal or the first function.

In other embodiments of the present application, the first request message carries a terminal address of the first terminal and/or a second identifier of the first function;

The second processing module 1002 is configured to obtain the first identifier based on at least one of the service of the second function, the terminal address of the first terminal or the second identifier.

In other embodiments of the present application, the first request message is a redirection request triggered by the first function.

In other embodiments of the present application, the second transmitting module 1003 is configured to transmit a third request message to a third function. Herein, the third request message is used to indicate that the second function supports a retrieval service or a provision service for an identifier of a terminal.

In other embodiments of the present application, the second processing module 1002 is configured to determine an address of the first function based on the second identifier; and transmit the first identifier to the first function based on the address of the first function.

In other embodiments of the present application, the second transmitting module 1003 is configured to transmit a redirection message to the first terminal. Herein, the redirection message carries the first identifier.

The description for the embodiments of the above device is similar to that for the embodiments of the above method and the embodiments of the above device have similar beneficial effects as the embodiments of the above method. For technical details not disclosed in the embodiments of the device of the present application, reference should be made to the description for the embodiments of the methods of the present application for understanding.

It should be noted that, in the embodiments of the present application, if the information acquisition method described above is implemented in the form of a software function module and sold or used as an independent product, the information acquisition method may be stored in a computer-readable storage medium. Based on such an understanding, the technical solutions of the embodiments of the present application, essentially or in part contributing to the relevant technology, may be embodied in the form of a software product, which is stored in a storage medium and includes a plurality of instructions for causing a terminal device to execute all or part of the methods of each embodiment of the present application. The storage medium includes various media capable of storing program codes, such as a Universal Serial Bus (USB) flash disk, a removable hard disk, a Read-Only Memory (ROM), a magnetic disk, or an optical disk. As such, the embodiments of the present application are not limited to any particular combination of hardware and software.

Embodiments of the present application provide a first terminal. The first terminal may be used to implement the information acquisition methods provided by the embodiments corresponding to FIG. 3. The first terminal1100 includes a third transmitting module 1101 and a third receiving module 1102.

The third transmitting module 1101 is configured to transmit a first request message to the second function. Herein, the first request message is used for obtaining a first identifier of the first terminal.

The third receiving module 1102 is configured to receive the first identifier transmitted by the second function.

In other embodiments of the present application, the first request message carries a terminal address of the first terminal and/or a second identifier of the first function.

In other embodiments of the present application, the first identifier is obtained by the second function based on at least one of a service of the second function, the terminal address of the first terminal and the second identifier.

In other embodiments of the present application, the third receiving module 1102 is configured to receive a redirection message transmitted by the second function. Herein, the redirection message carries the first identifier.

In other embodiments of the present application, the third transmitting module 1101 is configured to transmit a service request to the first function.

The third transmitting module 1101 is configured to transmit a first request message to the second function if the first function determines that the first identifier of the first terminal is required to be obtained when responding to the service request.

In other embodiments of the present application, the service request carries an address for indicating whether the first terminal supports two Internet protocol types.

In other embodiments of the present application, the first request message is a redirection request triggered by the first function.

The description for the embodiments of the above device is similar to that for the embodiments of the above method and the embodiments of the above device have similar beneficial effects as the embodiments of the above method. For technical details not disclosed in the embodiments of the device of the present application, reference should be made to the description for the embodiments of the methods of the present application for understanding.

It should be noted that, in the embodiments of the present application, if the information acquisition method described above is implemented in the form of a software function module and sold or used as an independent product, the information acquisition method may be stored in a computer-readable storage medium. Based on such an understanding, the technical solutions of the embodiments of the present application, essentially or in part contributing to the relevant technology, may be embodied in the form of a software product, which is stored in a storage medium and includes a plurality of instructions for causing a terminal device to execute all or part of the methods of each embodiment of the present application. The storage medium includes various media capable of storing program codes, such as a Universal Serial Bus (USB) flash disk, a removable hard disk, a Read-Only Memory (ROM), a magnetic disk, or an optical disk. As such, the embodiments of the present application are not limited to any particular combination of hardware and software.

Embodiments of the present application provide a third function. The third function may be used to implement an information acquisition method provided by the embodiments of the present application. Referring to FIG. 12, the third function 1200 includes: a fourth receiving module 1201, a fourth processing module 1202 and a fourth transmitting module 1203.

The fourth receiving module 1201 is configured to receive a second request message transmitted by the first function. Herein, the second request message carries a service name of the second function, a function type, an Internet Protocol address range of the second function, or an Internet Protocol address version expected by the second function.

The fourth processing module 1202 is configured to determine identification information of the second function based on the service name of the second function, the function type, the Internet Protocol address range of the second function, or the expected Internet Protocol address version of the second function.

The fourth transmitting module 1203 is configured to transmit the identification information of the second function to the first function.

In other embodiments of the present application, the fourth receiving module 1201 is configured to receive a third request message transmitted by the first function. Herein, the third request message is used to indicate that the second function supports a retrieval service or a provision service for an identifier of a terminal.

The description for the embodiments of the above device is similar to that for the embodiments of the above method and the embodiments of the above device have similar beneficial effects as the embodiments of the above method. For technical details not disclosed in the embodiments of the device of the present application, reference should be made to the description for the embodiments of the methods of the present application for understanding.

It should be noted that, in the embodiments of the present application, if the information acquisition method described above is implemented in the form of a software function module and sold or used as an independent product, the information acquisition method may be stored in a computer-readable storage medium. Based on such an understanding, the technical solutions of the embodiments of the present application, essentially or in part contributing to the relevant technology, may be embodied in the form of a software product, which is stored in a storage medium and includes a plurality of instructions for causing a terminal device to execute all or part of the methods of each embodiment of the present application. The storage medium includes various media capable of storing program codes, such as a Universal Serial Bus (USB) flash disk, a removable hard disk, a Read-Only Memory (ROM), a magnetic disk, or an optical disk. As such, the embodiments of the present application are not limited to any particular combination of hardware and software.

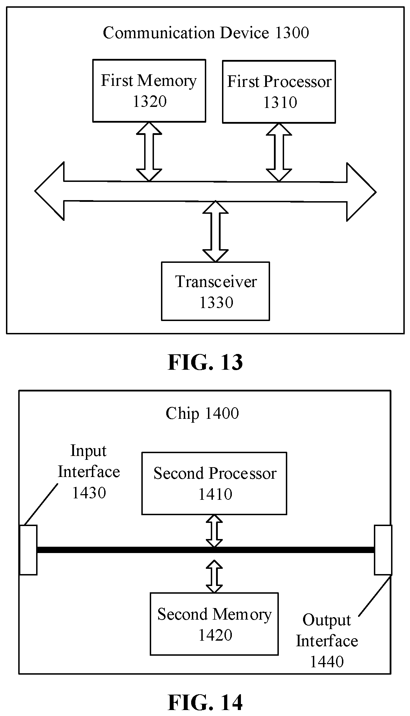

FIG. 13 is a schematic structural diagram of a communication device 1300 according to embodiments of the present application. The communication device may be a first function, a second function, a third function, or a first terminal. The communication device 1300 illustrated in FIG. 13 includes a first processor 1310, and the first processor 1310 may call and run a computer program from a memory to implement the method in the embodiments of the present application.

Optionally, as shown in FIG. 13, the communication device 1300 may further include a first memory 1320. The first processor 1310 may call and run a computer program from the first memory 1320 to implement the method in the embodiments of the present application.

The first memory 1320 may be a separate device independent of the first processor 1310, or may be integrated in the first processor 1310.

Optionally, as shown in FIG. 13, the communication device 1300 may further include a transceiver 1330. The first processor 1310 may control the transceiver 1330 to communicate with other devices, specifically, to transmit information or data to other devices, or receive information or data transmitted by other devices.

Here, the transceiver 1330 may include a transmitter and a receiver. The transceiver 1330 may further include antennas, and the number of antennas may be one or more.

Optionally, the communication device 1300 may specifically be the first function/the second function/the third function in the embodiments of the present application. The communication device 1300 may implement corresponding processes implemented by the first function/the second function/the third function in each method of the embodiments of the present application, and will not be described herein for the sake of brevity.

Optionally, the communication device 1300 may specifically be the first terminal in the embodiments of the present application. The communication device 1300 may implement corresponding procedures implemented by the first terminal in each method of the embodiments of the present application, and will not be repeatedly described here for the sake of brevity.

FIG. 14 is a schematic structural diagram of a chip according to an embodiment of the present application. The chip 1400 shown in FIG. 14 includes a second processor 1410. The second processor 1410 can call and run a computer program from a memory to implement the method in the embodiment of the present application.

Optionally, as shown in FIG. 14, the chip 1400 may further include a second memory 1420. The second processor 1410 may call and run a computer program from the second memory 1420 to implement the method in the embodiment of the present application.

The second memory 1420 may be a separate device independent of the second processor 1410, or may be integrated in the second processor 1410.

Optionally, the chip 1400 may further include an input interface 1430. The second processor 1410 may control the input interface 1430 to communicate with other devices or chips, specifically, to obtain information or data transmitted by other devices or chips.

Optionally, the chip 1400 may further include an output interface 1440. The second processor 1410 may control the output interface 1440 to communicate with other devices or chips, specifically, to output information or data to other devices or chips.

Optionally, the chip may be applied to the first terminal in the embodiments of the present application, and the chip may implement the corresponding process implemented by the first terminal in the methods of the embodiments of the present application, and will not be repeatedly described here for the sake of simplicity.

Optionally, the chip may be applied to the first function/the second function/the third function in the embodiments of the present application, and the chip may implement the corresponding process implemented by the first function/the second function/the third function in the methods of the embodiments of the present application, and will not be repeated here for the sake of brevity.

It should be understood that the chip mentioned in the embodiments of the present application may also be referred to as a system-level chip, a system chip, a chip system or a system-on-chip.

It should be understood that the processor in the embodiments of the present application may be an integrated circuit chip having signal processing capabilities. In the implementation process, the operations in the above-described method embodiments may be completed by integrated logic circuits in the form of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or a transistor logic device, or a discrete hardware component, which may implement or execute the methods, operations, and logical block diagrams disclosed in the embodiments of the present application. The general purpose processor may be a microprocessor or the processor may be any conventional processor or the like. The operations in the methods disclosed in connection with the embodiments of the present application may be directly embodied as execution by the hardware decoding processor, or may be executed by combining hardware and software modules in the decoding processor. The software module may be located in a storage medium mature in the art, such as a random access memory, a flash memory, an read-only memory, a programmable read-only memory or an electrically erasable and writable programmable memory, registers, etc. The storage medium is located in the memory. The processor reads the information in the memory, and combines its hardware to complete the operations of the above methods.

As one embodiment, the processor may include one or more general-purpose central processing units (CPUs). Each of these processors may be a single-CPU processor or a multi-CPU processor. The processor herein may refer to one or more devices, circuits, and/or processing cores for processing data (e.g., computer-executed instructions).

It is understood that the memory in the embodiments of the present application may be a volatile memory or a non-volatile memory, or may include both volatile and non-volatile memory. The non-volatile memory may be a ROM, a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory for the systems and methods described herein is intended to include, but is not limited to, these and any other suitable type of memory.

It should be understood that the above memory is illustrative but not limiting, for example, the memory in the embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present application is intended to include, but is not limited to, these and any other suitable type of memory.

Embodiments of the present application also provide a computer-readable storage medium for storing a computer program.

Optionally, the computer-readable storage medium may be applied to the first terminal in the embodiments of the present application, and the computer program causes a computer to execute the corresponding flow implemented by the first terminal in the methods of the embodiments of the present application, and the description thereof will not be repeated here for the sake of brevity.

Optionally, the computer-readable storage medium can be applied to the first function/the second function/the third function in the embodiments of the present application, and the computer program causes the computer to execute the corresponding flow realized by the first function/the second function/the third function in the methods of the embodiments of the present application, which is not repeated here for the sake of brevity.

The embodiments described above may be implemented in whole or in part by software, hardware, firmware, or any combination thereof. When implemented using software, the embodiments described above may be implemented in whole or in part in the form of a computer program product.

The computer program product includes one or more computer instructions. When computer program instructions are loaded and executed on a computer, processes or functions according to the embodiments of the present application are generated in whole or in part. The computer may be a general purpose computer, a special purpose computer, a computer network, or other programmable device. The computer instructions may be stored in a computer-readable storage medium or may be transmitted from one computer-readable storage medium to another computer-readable storage medium. For example, the computer instructions may be transmitted from one website site, computer, server, or data center to another website site, computer, server, or data center by wired (e.g., coaxial cable, optical fiber, digital subscriber line (DSL)) or wireless (e.g., infrared, wireless, microwave, etc.) means. The computer-readable storage medium may be any available medium that may be storable by a computer or a data storage device such as a server, a data center, or the like that contains one or more available media integrations. The available media may be a magnetic media (e.g., a floppy disk, a hard disk, a magnetic tape), an optical media (e.g., DVD), or a semiconductor media (e.g., a Solid State Disk (SSD)), etc.

The information acquisition method, the first function, the second function, the third function, the first terminal, and the computer-readable storage medium provided by the embodiments of the present application have been described in detail above. The principles and embodiments of the present application have been described herein by applying specific examples. The description for the above embodiments is only for helping to understand the method of the present application and the core idea thereof. Those skilled in the art may change the specific embodiments and the scope of application according to the spirit of the present application. In summary, the contents of the present specification should not be construed as limiting the present application.

It should be understood that references throughout the specification to "one embodiment" or "an embodiment" or "embodiments of the present application" or "the foregoing embodiments" or "some embodiments" or "some implements" mean that a specific feature, structure, or characteristic related to the embodiment is included in at least one embodiment of the present application. Therefore, the appearance of "in one embodiment" or "in an embodiment" or "embodiments of the present application" or "the foregoing embodiments" or "some embodiments" or "some implements" throughout the specification does not necessarily refer to the same embodiment. Furthermore, these particular features, structures, or characteristics may be incorporated in any suitable manner in one or more embodiments. It should be understood that in various embodiments of the present application, the sequence numbers of the above-described processes do not mean the sequence of execution, and the sequence of execution of various processes should be determined by its function and internal logic, and should not constitute any limitation on the implementation of the embodiments of the present application. The above-described serial numbers of the embodiments of the present application are for description only, and do not represent the advantages and disadvantages of the embodiments.

Unless otherwise specified, that the first function/the second function/the third function/the first terminal executes any operation in the embodiments of the present application, may be that the processor of the first function/the second function/the third function/the first terminal may execute the operation. Unless otherwise specified, the embodiments of the present application do not limit the sequence in which the first function/second function/third function/first terminal executes the following operations. In addition, the methods used to process data in different embodiments may be the same method or different methods.

**In** several embodiments provided herein, it should be understood that the disclosed apparatus and methods may be implemented in other ways. The device embodiments described above are merely schematic. For example, the division of units is only a logical function division. **In** actual implementation, there may be other division methods. For example, multiple units or components may be combined, or may be integrated into another system, or some features may be ignored, or may not be implemented. Additionally, the coupling, or direct coupling, or communication connection between the components shown or discussed may be through some interface, indirect coupling or communication connection of devices or units, and may be electrical, mechanical, or otherwise.

The units described above as separate components may or may not be physically separated, and the components shown as units may or may not be physical units. It can be located in one place or distributed to multiple network elements. Some or all of the units may be selected according to actual needs, to achieve the purpose of the solution of the present embodiment.

**In** addition, in the embodiments of the present application, all functional units may be integrated into one processing unit, each unit may be separately used as one unit, or two or more units may be integrated into one unit. The above integrated unit may be implemented in the form of hardware or in the form of hardware plus software functional units.

The methods disclosed in several method embodiments provided in the present application can be arbitrarily combined without conflict, to obtain new method embodiments.

The features disclosed in several product embodiments provided in the present application can be arbitrarily combined without conflicting, to obtain new product embodiments.

The features disclosed in several method or device embodiments provided in the present application can be arbitrarily combined without conflict to, obtain new method or device embodiments.

One of ordinary skill in the art will understand that all or part of the operations of implementing the above-described method embodiments can be completed by hardware related to program instructions, the aforementioned program can be stored in a computer storage medium The aforementioned program, when being executed, performs the operations including the above-described method embodiments. The storage medium includes various media capable of storing program codes, such as a removable storage device, a ROM, a magnetic disk, or an optical disk.

Alternatively, if the integrated unit of the present application is implemented in the form of a software function module and sold or used as an independent product, it may be stored in a computer storage medium. Based on this understanding, the technical solutions of the embodiments of the present application, essentially or in part contributing to the relevant technology, may be embodied in the form of a software product. The computer software product is stored in a storage medium and includes several instructions for causing a computer device (which may be a personal computer, a server, or a network device, etc.) to perform all or part of the methods described in the embodiments of the present application. The storage medium includes various media capable of storing program codes, such as a removable storage device, a ROM, a magnetic disk, or an optical disk.

As used in the embodiments of this application and the appended claims, the singular forms "a", "said" and "the" are also intended to include the plurality of forms unless the context clearly indicates otherwise.

It should be noted that, in the embodiments of the present application, all operations or some operations may be performed as long as a complete technical solution can be formed.

The foregoing is merely for the embodiments of the present application, but the scope of protection of the present application is not limited thereto. Changes or substitutions which may be obtained easily by any person skilled in the art within the technical scope disclosed in the present application should be covered within the scope of protection of the present application. Therefore, the protection scope of the present application should be based on the protection scope of the appended claims.

## Claims

1. An information acquisition method, applied to a first function, comprising:
triggering a first terminal to transmit a first request message to a second function, the first request message being used for obtaining a first identifier of the first terminal; and
receiving the first identifier of the first terminal transmitted by the second function.

2. The method of claim 1, wherein the first request message carries at least one of a terminal address of the first terminal or a second identifier of the first function.

3. The method of claim 2, wherein the first identifier is obtained by the second function based on at least one of a service of the second function, the terminal address of the first terminal, or the second identifier.

4. The method of any one of claims 1-3, wherein the first request message is a redirection request triggered by the first function.

5. The method of any one of claims 1-4, further comprising:
receiving a service request transmitted by the first terminal;
determining, based on the service request, whether the first identifier of the first terminal is required to be obtained when responding to the service request; and
if the first function determines that the first identifier of the first terminal is required to be obtained when responding to the service request, triggering the first terminal to transmit the first request message to the second function.

6. The method of any one of claims 1-5, further comprising:
obtaining identification information of the second function, the identification information comprising at least one of the following:
a third identifier of the second function;
an Internet Protocol address of the second function;
an Internet Protocol version number of the second function;
a fully qualified domain name of the second function; or
a port number of the second function.

7. The method of claim 6, wherein obtaining the identification information of the second function comprises:
obtaining the identification information of the second function from a local profile of the first function;
or,
obtaining the identification information of the second function by performing a domain name system query using the fully qualified domain name of the second function;
or,
obtaining the identification information of the second function by performing a service discovery procedure using a third identifier of the first terminal.

8. The method of claim 6, wherein obtaining the identification information of the second function comprises:
transmitting a second request message to a third function, wherein the second request message carries a service name of the second function, a function type, an Internet Protocol address range of the second function, or an expected Internet Protocol address version of the second function; and
receiving the identification information of the second function transmitted by the third function, wherein the identification information of the second function is determined by the third function based on the service name of the second function, the function type, the Internet Protocol address range of the second function, or the expected Internet Protocol address version of the second function.

9. An information acquisition method, applied to a second function, comprising:
receiving a first request message transmitted by a first terminal or a first function, the first request message being used for obtaining a first identifier of the first terminal;
obtaining the first identifier based on the first request message and a service of the second function; and
transmitting the first identifier to the first terminal or the first function.

10. The method of claim 9, wherein the first request message carries at least one of a terminal address of the first terminal or a second identifier of the first function.

11. The method of claim 10, wherein obtaining the first identifier based on the first request message and the service of the second function comprises:
obtaining the first identifier based on at least one of the service of the second function, the terminal address of the first terminal, or the second identifier.

12. The method of any one of claims 9-11, wherein the first request message is a redirection request triggered by the first function.

13. The method of any one of claims 9-12, further comprising:
transmitting a third request message to a third function, the third request message indicating that the second function supports a retrieval service or a provision service for an identifier of a terminal.

14. The method of claim 10, wherein transmitting the first identifier to the first function comprises:
determining an address of the first function based on the second identifier; and
transmitting, based on the address of the first function, the first identifier to the first function.

15. The method of any one of claims 9-14, wherein transmitting the first identifier to the first terminal comprises:
transmitting a redirection message to the first terminal, wherein the redirection message carries the first identifier.

16. An information acquisition method, applied to a first terminal, comprising:
transmitting a first request message to a second function, the first request message being used for obtaining a first identifier of the first terminal; and
receiving the first identifier of the first terminal transmitted by the second function.

17. The method of claim 16, wherein the first request message carries at least one of a terminal address of the first terminal or a second identifier of a first function.

18. The method of claim 17, wherein the first identifier is obtained by the second function based on at least one of a service of the second function, the terminal address of the first terminal, or the second identifier.

19. The method of any one of claims 16-18, wherein receiving the first identifier transmitted by the second function comprises:
receiving a redirection message transmitted by the second function, wherein the redirection message carries the first identifier.

20. The method of any one of claims 16-19, further comprising:
transmitting a service request to a first function;
in case that the first function determines that the first identifier of the first terminal is required to be obtained when responding to the service request, transmitting the first request message to the second function.

21. The method of claim 20, wherein the service request carries an address for indicating whether the first terminal supports two Internet protocol types.

22. The method of any one of claims 16-21, wherein the first request message is a redirection request triggered by a first function.

23. An information acquisition method, applied to a third function, comprising:
receiving a second request message transmitted by a first function, the second request message carrying a service name of a second function, a function type, an Internet Protocol address range of the second function, or an Internet Protocol address version expected by the second function; and
determining identification information of the second function based on the service name of the second function, the function type, the Internet Protocol address range of the second function, or the Internet Protocol address version expected by the second function; and
transmitting the identification information of the second function to the first function.

24. The method of claim 23, further comprising:
receiving a third request message transmitted by the first function, the third request message indicating that the second function supports a retrieval service or a provision service for an identifier of a terminal.

25. A first function, comprising:
a first processing module, configured to trigger a first terminal to transmit a first request message to a second function, the first request message being used for obtaining a first identifier of the first terminal; and
a first receiving module, configured to receive the first identifier of the first terminal transmitted by the second function.

26. A second function, comprising:
a second receiving module, configured to receive a first request message transmitted by a first terminal or a first function, the first request message being used for obtaining a first identifier of the first terminal;
a second processing module, configured to obtain the first identifier based on the first request message and a service of the second function; and
a second transmitting module, configured to transmit the first identifier to the first terminal or the first function.

27. A first terminal, comprising:
a third transmitting module, configured to transmit a first request message to a second function, the first request message being used for obtaining a first identifier of the first terminal; and
a third receiving module, configured to receive the first identifier of the first terminal transmitted by the second function.

28. A third function, comprising:
a fourth receiving module, configured to receive a second request message transmitted by a third function, the second request message carrying a service name of a second function, a function type, an Internet Protocol address range of the second function, or an Internet Protocol address version expected by the second function;
a fourth processing module, configured to determine identification information of the second function based on the service name of the second function, the function type, the Internet Protocol address range of the second function, or the Internet Protocol address version expected by the second function; and
a fourth transmitting module, configured to transmit the identification information of the second function to the first function.

29. A first function, comprising:
a first memory for storing executable instructions; and
a first processor, configured to execute the executable instructions stored in the first memory to perform the information acquisition method of any one of claims 1 to 8.

30. A second function, comprising:
a second memory for storing executable instructions; and
a second processor, configured to execute the executable instructions stored in the second memory to perform the information acquisition method of any one of claims 9 to 15.

31. A first terminal, comprising:
a third memory for storing executable instructions; and
a third processor, configured to execute the executable instructions stored in the third memory to perform the information acquisition method of any one of claims 16 to 22.

32. A third function, comprising:
a fourth memory for storing executable instructions; and
a fourth processor, configured to execute the executable instructions stored in the fourth memory to perform the information acquisition method of any one of claims 23 to 24.

33. A computer-readable storage medium storing one or more programs executable by one or more processors to implement the information acquisition method of any one of claims 1 to 8 or claims 9 to 15 or claims 16 to 22 or claims 23 to 24.
